# EUROPÄISCHE PATENTSCHRIFT

(11) **EP 3 990 232 B1**
(45) Veröffentlichungstag und Bekanntmachung des Hinweises auf die Patenterteilung: **24.04.2024**
(21) Anmeldenummer: 20742655.2
(22) Anmeldetag: 26.06.2020
(51) Int. Cl.: B25J 9/16, B25J 13/02, G06F 3/0481, G06F 3/04847, G05B 19/423

(54) **VERFAHREN ZUM VORGEBEN EINES EINGABEWERTS AN EINEM ROBOTERMANIPULATOR**
METHOD FOR SPECIFYING AN INPUT VALUE ON A ROBOTIC MANIPULATOR
PROCÉDÉ POUR SPÉCIFIER UNE VALEUR D'ENTRÉE SUR UN MANIPULATEUR ROBOTISÉ

(30) Priorität: 26.06.2019 DE 102019117217
(43) Veröffentlichungstag der Anmeldung: 04.05.2022
(73) Patentinhaber: Franka Emika GmbH, 80797 München (DE)
(72) Erfinder: SPENNINGER, Andreas, 85757 Karlsfeld (DE); GOLZ, Saskia, 80639 München (DE); PARUSEL, Sven, 80687 München (DE)
(74) Vertreter: Novagraaf Group
(86) Internationale Anmeldenummer: PCT/EP2020/067984
(87) Internationale Veröffentlichungsnummer: WO 2020/260556

(56) Entgegenhaltungen:
- WO-A1-2014/005607
- WO-A2-2018/049448
- US-A1- 2013 255 426
- US-A1- 2015 130 794
- US-A1- 2018 235 724

## Beschreibung

Die Erfindung betrifft ein Verfahren zum Vorgeben eines Eingabewerts an einem Robotermanipulator sowie einen Robotermanipulator, der zum Ausführen des Verfahrens eingerichtet und ausgeführt ist.

US2013255426 und US2018297202 gehören zum Stand der Technik.

Aufgabe der Erfindung ist es, die Vorgabe eines Eingabewertes eines Anwenders für einen Robotermanipulator intuitiver zu gestalten und zu vereinfachen.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Verfahren zum Vorgeben eines Eingabewerts an einem Robotermanipulator, wobei der Robotermanipulator eine Vielzahl von durch Gelenke miteinander verbundenen und gegeneinander durch Ansteuerung bewegbaren Gliedern aufweist, aufweisend die Schritte:
- Auswählen eines bestimmten aus einer Vielzahl von vordefinierten zu emulierenden Eingabegeräten durch Vorgabe eines Anwenders oder durch eine Steuereinheit des Robotermanipulators,
wobei jedem der zu emulierenden Eingabegeräte zumindest ein Freiheitsgrad des Robotermanipulators und örtliche Schranken im jeweiligen Freiheitsgrad und eine Übertragungsfunktion einer Koordinate des Robotermanipulators im Freiheitsgrad auf den Eingabewert zugeordnet ist,
- Ansteuern des Robotermanipulators derart, dass zumindest ein Teil des Robotermanipulators in dem dem ausgewählten zu emulierenden Eingabegerät zugeordneten jeweiligen Freiheitsgrad und innerhalb der dem zu emulierenden Eingabegerät zugeordneten örtlichen Schranken durch einen Anwender manuell bewegbar ist,
- Erfassen einer jeweiligen Koordinate im jeweiligen Freiheitsgrad während oder nach Abschluss einer durch manuelles Führen eines Anwenders ausgeübten Eingabe am Robotermanipulator durch zumindest eine mit dem Robotermanipulator verbundene Sensoreinheit, und
- Zuordnen der jeweiligen Koordinate zum Eingabewert durch Anwenden der Übertragungsfunktion.

Der Eingabewert ist insbesondere ein Parameter eines Steuerprogramms, welches vom Robotermanipulator später ausgeführt wird. Beispielsweise bezieht sich der Parameter auf eine Geschwindigkeit, insbesondere eine Vorgabe einer Geschwindigkeit, oder auf eine Kraft, insbesondere eine Vorgabe einer Kraft, auf einen Grenzwerts, oder auf einen Reglerparameter, wie eine Verstärkung oder einer Bandbreite eines Reglers des Robotermanipulators.

Die Eingabegeräte sind gedachte physikalisch existierende Geräte, an denen zumindest ein Eingabewert durch einen Anwender vorgegeben werden kann. Daten über die vordefinierten zu emulierenden Eingabegeräte sind bevorzugt in einem Speicher des Robotermanipulators abgelegt. Generell werden Eingabegeräte in vielen Bereichen von Mensch-Maschine-Schnittstellen verwendet, in Fahrzeugen, Arbeitsmaschinen, in Haushaltsgeräten, oder auch in Robotermanipulatoren. Die analog physikalisch existierenden Eingabegeräte weisen daher insbesondere relativ zueinander bewegliche materielle Strukturen auf, wie bei einem Schalter, einem Kippschalter, einem Drehschalter, einem Schieberegler, einem Hebel, oder dergleichen. Jeder dieser physikalisch existierenden Geräte ist dabei auf gewisse Freiheitsgrade beschränkt, beispielsweise ist ein klassischer Drehschalter nur um eine Hochachse verdrehbar, wobei ein aktueller Winkel des Drehschalters gegenüber einem Gehäuse oder einer Auflage des Drehschalters Vorgabewerte entspricht. Erfindungsgemäß wird nun der Robotermanipulator so angesteuert und Sensordaten einer Sensoreinheit so ausgelesen, dass eine aktuelle Position des Robotermanipulators einem solchen bestimmten Vorgabewert entspricht, als wäre er an einem physikalisch existierenden Drehschalter vorgenommen worden. Die Position des Robotermanipulators bezieht sich dabei insbesondere sowohl auf eine translatorische Positionskoordinate, bzw. Positionsvektor, als auch unter Umständen auf einen bestimmten Winkel, welchen insbesondere zwei Glieder des Robotermanipulators zueinander einnehmen. So wird bevorzugt ein Drehwinkel des Endeffektors, der an einem distalen Ende des Robotermanipulators angeordnet ist, gegenüber demjenigen Glied des Robotermanipulators, an dem der Endeffektor angeordnet ist, in einen zugehörigen Winkel eines gedachten Drehschalters übersetzt, wodurch sich für den Anwender vorteilhaft der Eindruck ergibt, als wäre der Endeffektor tatsächlich der real existierende Drehschalter.

Dementsprechend wird ein Eingabegerät emuliert, indem am Robotermanipulator eine ähnliche Bewegung durch den Benutzer stattfinden kann, als würde er mit dem physikalischen Pendant des gedachten Eingabegerätes interagieren. Ein weiteres Beispiel ist ein Schieberegler, der durch den Robotermanipulator emuliert wird, in dem der Robotermanipulator, bzw. ein ausgewählter Punkt auf dem Robotermanipulator, insbesondere der Endeffektor des Robotermanipulators, nur über eine vordefinierte Wegstrecke auf einer Geraden im Raum vom Anwender manuell geführt werden kann.

Entsprechend erfolgt das Ansteuern des Robotermanipulators, wobei der Robotermanipulator durch Gelenke miteinander verbundene Glieder aufweist. Insbesondere an den Gelenken sind Aktuatoren angeordnet, bevorzugt mittels eines Getriebes, die dazu ausgeführt sind, die Glieder gegeneinander zu bewegen. So können die Aktuatoren auch dazu verwendet werden, bestimmte Freiheitsgrade zu sperren und andere Freiheitsgrade freizugeben, wobei unter dem Begriff der Freiheitsgrade im Sinne dieser Erfindung beliebige Richtungen oder Kurven zu verstehen sind, in denen sich ein vorgegebener Punkt auf dem Robotermanipulator bewegen kann. So kann als Freiheitsgrad beispielsweise eine dreidimensionale Kurve bezeichnet werden, die beispielsweise auch lediglich durch das Freischalten eines einzigen Gelenkes erreicht werden kann. Die Aktuatoren sorgen im letzteren Fall dafür, dass alle bis auf genau zwei um ein Gelenk angeordnete Glieder gegen eine vom Anwender durch manuelles Führen induzierte Bewegung gesperrt sind.

Die mit dem Robotermanipulator verbundene Sensoreinheit umfasst bevorzugt die Gesamtheit aller Gelenkwinkelsensoren in den Gelenken des Robotermanipulators, sodass hierdurch immer die Position des Endeffektors gegenüber einem erdfesten Bezugssystem bevorzugt im kartesischen Raum bestimmbar ist. Alternativ dazu ist die mit dem Robotermanipulator verbundene Sensoreinheit bevorzugt ein Kamerasystem oder ein Bewegungserfassungssystem, dessen einzelnen Sensorelemente um den Robotermanipulator herum angeordnet sind, um von außen eine Position bzw. gewisse Winkel des Robotermanipulators zu erfassen. Somit ist es möglich, dass eine Koordinate des Robotermanipulators im ausgewählten Freiheitsgrad erfasst wird.

Mithilfe der vorgegebenen Übertragungsfunktion ist diese erfasste Koordinate in einen zugeordneten Eingabewert umrechenbar, wobei bevorzugt über eine lineare Skala die Koordinate im Freiheitsgrad des Robotermanipulators in diesen Eingabewert umgerechnet wird. Vorteilhaft können Skalen definiert werden, die für die aktuelle Anwendung am passensten sind. Auch nichtlineare Skalen sind möglich, so ist insbesondere eine logarithmische Skala vorteilhaft dann in Anwendung, wenn eherr die Größenordnungen eines Eingabewertes von Interesse sind, als der tatsächliche genaue numerische Wert.

Die örtlichen Schranken entsprechen dabei den mechanischen Schranken des gedachten physikalisch existierenden Eingabegeräts, wobei beispielsweise ein Schieberegler ein linkes und ein rechtes Ende aufweist, und ein Drehregler beispielsweise eine untere Schranke beim Drehen gegen den Uhrzeigersinn und eine obere Schranke beim Drehen mit dem Uhrzeigersinn aufweist. Die örtlichen Schranken werden am Robotermanipulator durch entsprechende Ansteuerung der Aktuatoren des Robotermanipulators künstlich erzeugt. Dementsprechend wird ein Gegenmoment gegen die vom Anwender aufgebrachte Kraft auf den Robotermanipulator so erzeugt, dass sich der Robotermanipulator nicht mehr weiter über diese Schranke hinaus durch manuelles Führen bewegen lässt.

Findet das Erfassen der jeweiligen Koordinate im jeweiligen Freiheitsgrad nach Abschluss der durch manuelles Führen eines Anwenders ausgeübten Eingabe am Robotermanipulator durch die zumindest eine mit dem Robotermanipulator verbundene Sensoreinheit statt, so wird nur derjenige Wert der Koordinate erfasst, der zum Ende des manuellen Führens des Anwenders vorliegt. Insoweit wird keine vollständige Zeitreihe von Koordinaten über den Verlauf des Führens des Anwenders erfasst und entsprechend protokolliert, sondern nur der Endwert. Wann dieser Endwert vorliegt, wird vorteilhaft automatisch bestimmt, insbesondere indem erfasst wird, dass keine Geschwindigkeit mehr am Robotermanipulator aufgrund von manuellem Führen vorliegt.

Die Zuordnung des jeweiligen zu emulierenden Eingabegeräts zum jeweiligen Freiheitsgrad des Robotermanipulators und den örtliche Schranken im jeweiligen Freiheitsgrad und der Übertragungsfunktion ist bevorzugt vordefiniert; alternativ dazu bevorzugt kann diese Zuordnung auch auf Vorgabe des Anwenders hin erfolgen.

Es ist eine vorteilhafte Wirkung der Erfindung, dass für einen Anwender das Verhalten einer Vielzahl von möglichen physikalischen Eingabegeräten zur Verfügung steht. Es kann somit dasjenige Eingabegerät emuliert werden, dass für die gegenwärtige Situation oder die vorliegende Aufgabe am besten geeignet ist, um intuitiv dem Anwender eine Vorgabe des Eingabewertes zu ermöglichen. Insbesondere dann, wenn für jedermann bekannte Eingabegeräte wie Schieberegler und Drehregler verwendet werden, so kann der Robotermanipulator ohne Aufwand das Verhalten eines solchen gewünschten Eingabegerät simulieren, und dem Anwender eine intuitive Vorgabe eines Eingabewertes ermöglichen. Weiterhin vorteilhaft benötigt der Robotermanipulator keine physikalisch vorhandene Ausführung eines solchen jeweiligen Eingabegeräts, und kann daher einfacher und kostengünstiger ausgestaltet werden.

Gemäß einer vorteilhaften Ausführungsform erfolgt das Ansteuern des Robotermanipulators derart, dass alle übrigen Teile des Robotermanipulators gegen manuelles Führen des Anwenders gesperrt sind.

Gemäß dieser Ausführungsform wird genau ein einziger Freiheitsgrad des Robotermanipulators freigegeben, und alle übrigen Möglichkeiten der Bewegung des Robotermanipulators werden gehemmt. Ist insbesondere der Freiheitsgrad eine geradlinige Strecke im Raum, wobei die geradlinige Strecke unabhängig von den aktuellen Gelenkwinkeln des Robotermanipulators definierbar ist, so ist der Robotermanipulator, insbesondere ein ausgewählter Punkt auf diesem Robotermanipulator, lediglich auf dieser geradlinigen Strecke im Raum bewegbar, wobei keine anderen Bewegungen des Robotermanipulators durch das manuelle Führen des Anwenders zugelassen werden. Vorteilhaft bietet sich so für den Anwender eine eindeutige und intuitiv erfassbare Bewegungsmöglichkeit des Robotermanipulators.

Gemäß einer weiteren vorteilhaften Ausführungsform erfolgt das Ansteuern des Robotermanipulators derart, dass zumindest eine Untermenge der übrigen Teile des Robotermanipulators zum manuellen Führen des Anwenders freigegeben sind.

Gemäß dieser Ausführungsform können weitere Bewegungsmöglichkeiten des Robotermanipulators zugelassen werden, insbesondere dann, wenn keine Kopplungen oder Störungen beim manuellen Führen im Freiheitsgrad des Robotermanipulators gegenüber der weiteren Bewegungsmöglichkeit auftreten, beispielsweise wenn am Endeffektor die Vorgabe des Eingabewertes erfolgt, während die übrigen Gelenke des Robotermanipulators bevorzugt lediglich schwerkraftkompensiert angesteuert werden. Vorteilhaft ergibt sich durch diese Ausführungsform ein höherer Komfort für den Anwender, da er auch weitere nicht gesperrte Bewegungsmöglichkeiten am Robotermanipulator noch nutzen kann.

Gemäß einer weiteren vorteilhaften Ausführungsform erfolgt das Ansteuern des Robotermanipulators derart, dass der zumindest ein Teil des Robotermanipulators im jeweiligen Freiheitsgrad eine haptische Rückmeldung ausgibt, wobei die haptische Rückmeldung ein über die Wegstrecke des manuellen Führens veränderter Widerstand gegenüber der Kraft des Anwenders beim manuellen Führen des Robotermanipulators ist.

Die haptische Rückmeldung ist bevorzugt eine mit steigendem Wert der Koordinate im Freiheitsgrad des Robotermanipulators steigende Widerstandskraft oder auch eine periodisch auftretende Widerstandskraft, sodass vorteilhaft ein haptisches Raster vom Robotermanipulator erzeugt wird, wodurch der Anwender eine haptische Rückmeldung zur Höhe des vorgegebenen Eingabewertes erhält, insbesondere wenn nur periodische Vielfache von Werten interessieren.

Gemäß einer weiteren vorteilhaften Ausführungsform weist der Widerstand dort ein lokales Minimum auf, wo die aktuelle Koordinate im jeweiligen Freiheitsgrad des Robotermanipulators mit einer ganzen Zahl des Ergebnis der Anwendung der Übertragungsfunktion übereinstimmt.

Vorteilhaft wird mithilfe dieser Ausführungsform eine Eingabe von Zahlen mit Nachkommastellen verhindert, insbesondere dann, wenn die haptische Rückmeldung des Robotermanipulators eine derartige Kraft aufbringt, dass sich beim Loslassen des Robotermanipulators ein vorbestimmter Punkt am Robotermanipulator durch die die haptische Rückmeldung erzeugende Gegenkraft des Robotermanipulators in ein solches lokales Minimum, bevorzugt gedämpft, zurück bewegt.

Gemäß einer weiteren vorteilhaften Ausführungsform weist das Verfahren weiterhin die Schritte auf:
- kontinuierliches Erfassen der jeweiligen Koordinate im jeweiligen Freiheitsgrad während der durch manuelles Führen eines Anwenders ausgeübten Eingabe am Robotermanipulator durch die zumindest eine mit dem Robotermanipulator verbundene Sensoreinheit, und
- Synchron zum kontinuierlichen Erfassen der jeweiligen Koordinate: Ausgeben des Eingabewerts an einer optischen Ausgabeeinheit.

Die optische Ausgabeeinheit ist bevorzugt ein mit dem Robotermanipulator verbundener Bildschirm, auf dem das gedachte physikalische Eingabegerät angezeigt wird, wobei die Anzeige insbesondere derart erfolgt, dass das gedachte physikalische Eingabegerät in seiner aktuell angezeigten Fassung in einem solchen Zustand gezeigt wird, als würde der aktuelle Eingabewert tatsächlich am physikalischen Eingabegerät vorliegen. Vorteilhaft wird dem Anwender daher eine leicht verständliche Rückmeldung gegeben, wie erstens das zu emulierende Eingabegerät tatsächlich aussieht, wodurch von ihm gewisse Eigenschaften in der Bewegung intuitiv ableitbar sind, und dem Anwender wird vorteilhaft eine Rückmeldung gegeben, in welcher Größenordnung oder in welcher Näherung oder auch an welchem genauen Wert sich der aktuelle Eingabewert gerade befinden würde und damit vorgegeben werden würde.

Gemäß einer weiteren vorteilhaften Ausführungsform ist das zu emulierende Eingabegerät eines aus den folgenden: Schieberegler, Drehregler, Joystick, Druckknopf.

Gemäß einer weiteren vorteilhaften Ausführungsform erfolgt das Auswählen des zu emulierenden Eingabegeräts durch Ausführen und Erfassen einer vom Anwender am Robotermanipulator ausgeführten haptischen Geste, und insbesondere ferner durch Zuordnen der erfassten Geste zu einer aus einer Vielzahl von gespeicherten Gesten.

Gemäß einer weiteren vorteilhaften Ausführungsform erfolgt das Auswählen des zu emulierenden Eingabegeräts durch Erfassen einer vom Anwender eingegebenen Eingabe an einem berührempfindlichen Bildschirm, wobei der berührempfindliche Bildschirm am Robotermanipulator, oder an einem am Robotermanipulator angeordneten Greifer angeordnet ist.

Ein weiterer Aspekt der Erfindung betrifft einen Robotermanipulator, wobei der Robotermanipulator eine Vielzahl von durch Gelenke miteinander verbundenen und gegeneinander durch Ansteuerung bewegbaren Gliedern aufweist, aufweisend:
- ein Vorgabeelement, das zum Auswählen eines bestimmten aus einer Vielzahl von vordefinierten zu emulierenden Eingabegeräten ausgeführt ist, wobei jedem der zu emulierenden Eingabegeräte zumindest ein Freiheitsgrad des Robotermanipulators und örtliche Schranken im jeweiligen Freiheitsgrad und eine Übertragungsfunktion einer Koordinate des Robotermanipulators im Freiheitsgrad auf den Eingabewert zugeordnet ist,
- eine Steuereinheit, die zum Ansteuern des Robotermanipulators derart ausgeführt ist, dass zumindest ein Teil des Robotermanipulators in dem dem ausgewählten zu emulierenden Eingabegerät zugeordneten jeweiligen Freiheitsgrad und innerhalb der dem zu emulierenden Eingabegerät zugeordneten örtlichen Schranken durch einen Anwender manuell bewegbar ist,
- eine mit dem Robotermanipulator verbundene Sensoreinheit, die zum Erfassen einer jeweiligen Koordinate im jeweiligen Freiheitsgrad während oder nach Abschluss einer durch manuelles Führen eines Anwenders ausgeübten Eingabe am Robotermanipulator ausgeführt ist, und
wobei die Steuereinheit zum Zuordnen der jeweiligen Koordinate zum Eingabewert durch Anwenden der Übertragungsfunktion ausgeführt ist.

Gemäß einer vorteilhaften Ausführungsform ist die Steuereinheit zum Ansteuern des Robotermanipulators derart ausgeführt, dass alle übrigen Teile des Robotermanipulators gegen manuelles Führen des Anwenders gesperrt sind.

Gemäß einer weiteren vorteilhaften Ausführungsform ist die Steuereinheit zum Ansteuern des Robotermanipulators derart ausgeführt, dass zumindest eine Untermenge der übrigen Teile des Robotermanipulators zum manuellen Führen des Anwenders freigegeben sind.

Gemäß einer weiteren vorteilhaften Ausführungsform ist die Steuereinheit zum Ansteuern des Robotermanipulators derart ausgeführt, dass der zumindest eine Teil des Robotermanipulators im jeweiligen Freiheitsgrad eine haptische Rückmeldung ausgibt, wobei die haptische Rückmeldung ein über die Wegstrecke des manuellen Führens veränderter Widerstand gegenüber der Kraft des Anwenders beim manuellen Führen des Robotermanipulators ist.

Gemäß einer weiteren vorteilhaften Ausführungsform weist der Widerstand dort ein lokales Minimum auf, wo die aktuelle Koordinate im jeweiligen Freiheitsgrad des Robotermanipulators mit einer ganzen Zahl des Ergebnis der Anwendung der Übertragungsfunktion übereinstimmt.

Gemäß einer weiteren vorteilhaften Ausführungsform ist die mit dem Robotermanipulator verbundene Sensoreinheit zum kontinuierlichen Erfassen der jeweiligen Koordinate im jeweiligen Freiheitsgrad während der durch manuelles Führen eines Anwenders ausgeübten Eingabe am Robotermanipulator ausgeführt, und eine mit dem Robotermanipulator, insbesondere der Steuereinheit des Robotermanipulators, verbundene optische Ausgabeeinheit zum Ausgeben des Eingabewerts synchron zum kontinuierlichen Erfassen der jeweiligen Koordinate ausgeführt.

Vorteile und bevorzugte Weiterbildungen des vorgeschlagenen Robotermanipulators ergeben sich durch eine analoge und sinngemäße Übertragung der im Zusammenhang mit dem vorgeschlagenen Verfahren vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: einen Robotermanipulator gemäß einem Ausführungsbeispiel der Erfindung,
- Fig. 2: Alternativen zur optischen Ausgabe des Eingabewertes gemäß einem weiteren Ausführungsbeispiel der Erfindung, und
- Fig. 3: ein Verfahren zum Vorgeben eines Eingabewerts an einem Robotermanipulator gemäß einem weiteren Ausführungsbeispiel der Erfindung.

Die Darstellungen in den Figuren sind schematisch und nicht maßstäblich.

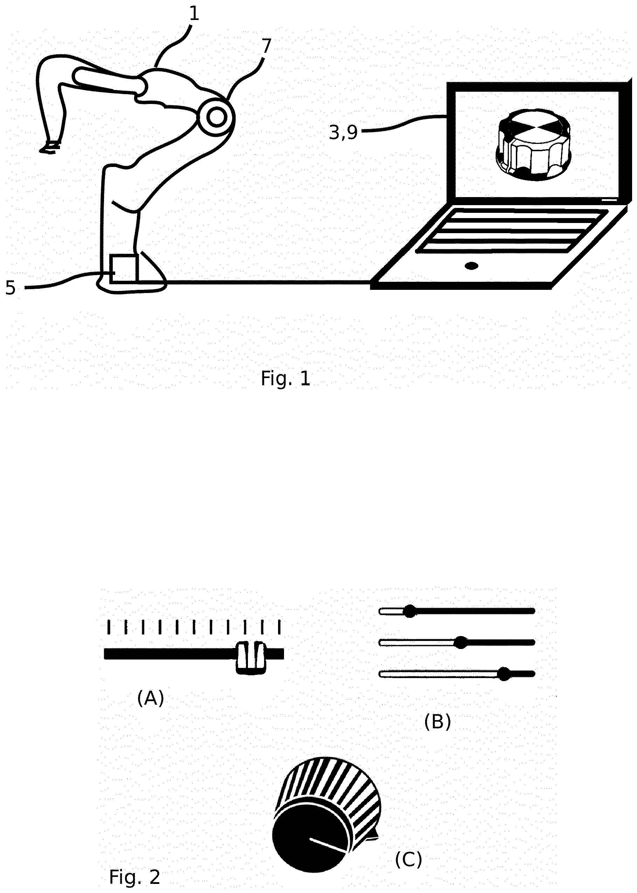

Fig. 1 zeigt einen Robotermanipulator 1, wobei der Robotermanipulator 1 eine Vielzahl von durch Gelenke miteinander verbundenen und gegeneinander durch Ansteuerung bewegbaren Gliedern aufweist. Der Robotermanipulator 1 weist durch den mit dem Robotermanipulator 1 verbundenen Rechner ein Vorgabeelement 3 auf, das zum manuellen Auswählen eines bestimmten aus einer Vielzahl von vordefinierten zu emulierenden Eingabegeräten dient. Jedem der zu emulierenden Eingabegeräte ist zumindest ein Freiheitsgrad des Robotermanipulators 1, das heißt eine bereichsmäßig definierte Bewegungsmöglichkeit, und örtliche Schranken im jeweiligen Freiheitsgrad und eine Übertragungsfunktion einer Koordinate des Robotermanipulators 1 im Freiheitsgrad auf den Eingabewert zugeordnet. Ferner weist der Robotermanipulator 1 eine Steuereinheit 5 auf, die zum Ansteuern des Robotermanipulators 1 derart ausgeführt ist, dass zumindest ein Teil des Robotermanipulators 1 in dem dem ausgewählten zu emulierenden Eingabegerät zugeordneten jeweiligen Freiheitsgrad und innerhalb der dem zu emulierenden Eingabegerät zugeordneten örtlichen Schranken durch einen Anwender manuell bewegbar ist. Eine als die Gesamtheit von Gelenkwinkelsensoren des Robotermanipulators ausgeführte Sensoreinheit 7 dient zum Erfassen einer jeweiligen Koordinate im jeweiligen Freiheitsgrad nach Abschluss einer durch manuelles Führen eines Anwenders ausgeübten Eingabe am Robotermanipulator 1. Hierbei ordnet die Steuereinheit 5 eine jeweilige Koordinate zum Eingabewert durch Anwenden der Übertragungsfunktion zu. Da es sich bei dem Eingabegerät, welches auch synchronisiert zur Eingabe des Anwenders auf der Ausgabeeinheit 9 dargestellt wird, um einen rotatorisch beweglichen Drehschalter handelt, wird am Robotermanipulator 1 auch ein rotatorischer Freiheitsgrad freigeschaltet. Dieser rotatorische Freiheitsgrad befindet sich zwischen dem Endeffektor und dem distalen Glied des Robotermanipulators 1, an dem der Endeffektor angeordnet ist.

Fig. 2 zeigt mehrere Alternativen gegenüber dem in Fig. 1 gezeigten Drehschalter, nämlich unter (A) einen Schieberegler, wobei der Schieberegler nur eine endliche Anzahl von diskreten Werten einnehmen kann, sodass am Robotermanipulator 1 eine haptische Rückmeldung gegeben wird, in dem ein künstliches Potentialgitter vorgegeben wird, wobei sich der Robotermanipulator 1 in eines der nächstgelegenen Minima beim Loslassen des Robotermanipulators 1 von selbst bewegt. Unter (B) ist dagegen ein kontinuierlicher Schieberegler gezeigt, der im Rahmen der numerischen Genauigkeit und quantifizierten Signalen der Positionssensoren des Robotermanipulators in seinen Gelenken beliebige numerische Werte als Eingabewerte einnehmen kann. Unter (C) dagegen ist ein alternativer Drehregler gezeigt, der ähnlich zum unter (A) gezeigten Schieberegler nur eine endliche Menge von diskreten Werten einnehmen kann.

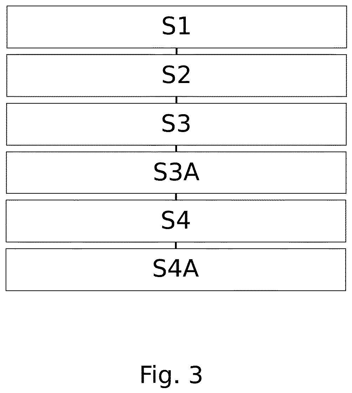

Fig. 3 zeigt Verfahren zum Vorgeben eines Eingabewerts an einem Robotermanipulator 1, wobei der Robotermanipulator 1 eine Vielzahl von durch Gelenke miteinander verbundenen und gegeneinander durch Ansteuerung bewegbaren Gliedern aufweist, aufweisend die Schritte:
- Auswählen S1 eines bestimmten aus einer Vielzahl von vordefinierten zu emulierenden Eingabegeräten durch Vorgabe eines Anwenders oder durch eine Steuereinheit des Robotermanipulators 1,
wobei jedem der zu emulierenden Eingabegeräte zumindest ein Freiheitsgrad des Robotermanipulators 1 und örtliche Schranken im jeweiligen Freiheitsgrad und eine Übertragungsfunktion einer Koordinate des Robotermanipulators 1 im Freiheitsgrad auf den Eingabewert zugeordnet ist,
- Ansteuern S2 des Robotermanipulators 1 derart, dass zumindest ein Teil des Robotermanipulators 1 in dem dem ausgewählten zu emulierenden Eingabegerät zugeordneten jeweiligen Freiheitsgrad und innerhalb der dem zu emulierenden Eingabegerät zugeordneten örtlichen Schranken durch einen Anwender manuell bewegbar ist,
- Erfassen S3 einer jeweiligen Koordinate im jeweiligen Freiheitsgrad während oder nach Abschluss einer durch manuelles Führen eines Anwenders ausgeübten Eingabe am Robotermanipulator 1 durch zumindest eine mit dem Robotermanipulator 1 verbundene Sensoreinheit,
- kontinuierliches Erfassen S3A der jeweiligen Koordinate im jeweiligen Freiheitsgrad,
- Zuordnen S4 der jeweiligen Koordinate zum Eingabewert durch Anwenden der Übertragungsfunktion, und
- Synchron zum kontinuierlichen Erfassen der jeweiligen Koordinate: Ausgeben S4A des Eingabewerts an einer optischen Ausgabeeinheit.

### Bezugszeichenliste

- 1: Robotermanipulator
- 3: Vorgabeelement
- 5: Steuereinheit
- 7: Sensoreinheit
- 9: Ausgabeeinheit

- S1: Auswählen
- S2: Ansteuern
- S3: Erfassen
- S3A: Ausgeben
- S4: Zuordnen
- S4A: Erfassen

## Patentansprüche

1. Verfahren zum Vorgeben eines Eingabewerts an einem Robotermanipulator (1), wobei der Robotermanipulator (1) eine Vielzahl von durch Gelenke miteinander verbundenen und gegeneinander durch Ansteuerung bewegbaren Gliedern aufweist, aufweisend die Schritte:
- Auswählen (S1) eines bestimmten aus einer Vielzahl von vordefinierten zu emulierenden Eingabegeräten durch Vorgabe eines Anwenders oder durch eine Steuereinheit (5) des Robotermanipulators (1),
wobei jedem der zu emulierenden Eingabegeräte zumindest ein Freiheitsgrad des Robotermanipulators (1) und örtliche Schranken im jeweiligen Freiheitsgrad und eine Übertragungsfunktion einer Koordinate des Robotermanipulators (1) im Freiheitsgrad auf den Eingabewert zugeordnet ist,
- Ansteuern (S2) des Robotermanipulators (1) derart, dass zumindest ein Teil des Robotermanipulators (1) in dem dem ausgewählten zu emulierenden Eingabegerät zugeordneten jeweiligen Freiheitsgrad und innerhalb der dem zu emulierenden Eingabegerät zugeordneten örtlichen Schranken durch einen Anwender manuell bewegbar ist,
- Erfassen (S3) einer jeweiligen Koordinate im jeweiligen Freiheitsgrad während oder nach Abschluss einer durch manuelles Führen eines Anwenders ausgeübten Eingabe am Robotermanipulator (1) durch zumindest eine mit dem Robotermanipulator (1) verbundene Sensoreinheit (7), und
- Zuordnen (S4) der jeweiligen Koordinate zum Eingabewert durch Anwenden der Übertragungsfunktion.

2. Verfahren nach Anspruch 1,
wobei das Ansteuern des Robotermanipulators (1) derart erfolgt, dass alle übrigen Teile des Robotermanipulators (1) gegen manuelles Führen des Anwenders gesperrt sind.

3. Verfahren nach Anspruch 1,
wobei das Ansteuern des Robotermanipulators (1) derart erfolgt, dass zumindest eine Untermenge der übrigen Teile des Robotermanipulators (1) zum manuellen Führen des Anwenders freigegeben sind.

4. Verfahren nach einem der vorhergehenden Ansprüche,
wobei das Ansteuern des Robotermanipulators (1) derart erfolgt, dass der zumindest eine Teil des Robotermanipulators (1) im jeweiligen Freiheitsgrad eine haptische Rückmeldung ausgibt, wobei die haptische Rückmeldung ein über die Wegstrecke des manuellen Führens veränderter Widerstand gegenüber der Kraft des Anwenders beim manuellen Führen des Robotermanipulators (1) ist.

5. Verfahren nach Anspruch 4,
wobei der Widerstand dort ein lokales Minimum aufweist, wo die aktuelle Koordinate im jeweiligen Freiheitsgrad des Robotermanipulators (1) mit einer ganzen Zahl des Ergebnis aus Anwendung der Übertragungsfunktion übereinstimmt.

6. Verfahren nach einem der vorhergehenden Ansprüche,
weiterhin aufweisend die Schritte:
- kontinuierliches Erfassen (S3A) der jeweiligen Koordinate im jeweiligen Freiheitsgrad während der durch manuelles Führen eines Anwenders ausgeübten Eingabe am Robotermanipulator (1) durch die zumindest eine mit dem Robotermanipulator (1) verbundene Sensoreinheit, und
- Synchron zum kontinuierlichen Erfassen der jeweiligen Koordinate: Ausgeben (S4A) des Eingabewerts an einer optischen Ausgabeeinheit (9).

7. Verfahren nach einem der vorhergehenden Ansprüche,
wobei das zu emulierende Eingabegerät eines aus den folgenden ist:
- Schieberegler,
- Drehregler,
- Joystick,
- Druckknopf.

8. Verfahren nach einem der Ansprüche 1 bis 7,
wobei das Auswählen des zu emulierenden Eingabegeräts durch Ausführen und Erfassen einer vom Anwender am Robotermanipulator (1) ausgeführten haptischen Geste erfolgt.

9. Verfahren nach einem der Ansprüche 1 bis 7,
wobei das Auswählen des zu emulierenden Eingabegeräts durch Erfassen einer vom Anwender eingegebenen Eingabe an einem berührempfindlichen Bildschirm erfolgt, wobei der berührempfindlichen Bildschirm am Robotermanipulator (1) oder an einem am Robotermanipulator (1) angeordneten Greifer angeordnet ist.

10. Robotermanipulator (1), wobei der Robotermanipulator (1) eine Vielzahl von durch Gelenke miteinander verbundenen und gegeneinander durch Ansteuerung bewegbaren Gliedern aufweist, aufweisend:
- ein Vorgabeelement (3), das zum Auswählen eines bestimmten aus einer Vielzahl von vordefinierten zu emulierenden Eingabegeräten ausgeführt ist, wobei jedem der zu emulierenden Eingabegeräte zumindest ein Freiheitsgrad des Robotermanipulators (1) und örtliche Schranken im jeweiligen Freiheitsgrad und eine Übertragungsfunktion einer Koordinate des Robotermanipulators (1) im Freiheitsgrad auf den Eingabewert zugeordnet ist,
- eine Steuereinheit (5), die zum Ansteuern des Robotermanipulators (1) derart ausgeführt ist, dass zumindest ein Teil des Robotermanipulators (1) in dem dem ausgewählten zu emulierenden Eingabegerät zugeordneten jeweiligen Freiheitsgrad und innerhalb der dem zu emulierenden Eingabegerät zugeordneten örtlichen Schranken durch einen Anwender manuell bewegbar ist,
- eine mit dem Robotermanipulator (1) verbundene Sensoreinheit (7), die zum Erfassen einer jeweiligen Koordinate im jeweiligen Freiheitsgrad während oder nach Abschluss einer durch manuelles Führen eines Anwenders ausgeübten Eingabe am Robotermanipulator (1) ausgeführt ist, und
wobei die Steuereinheit (5) zum Zuordnen der jeweiligen Koordinate zum Eingabewert durch Anwenden der Übertragungsfunktion ausgeführt ist.

## Claims

1. A method for specifying an input value on a robotic manipulator (1), wherein the robotic manipulator (1) comprises a plurality of limbs which are connected to one another by articulations and which can be moved with respect to one another by actuation, having the steps of:
- selecting (S1) a particular input device to be emulated from a plurality of predefined input devices to be emulated, by specification on the part of a user or by a control unit (5) of the robotic manipulator (1),
wherein each of the input devices to be emulated is assigned at least one degree of freedom of the robotic manipulator (1) and local limits in the relevant degree of freedom and a transfer function of a coordinate of the robotic manipulator (1) in the degree of freedom onto the input value onto the input value,
- actuating (S2) the robotic manipulator (1) in such a manner that at least one part of the robotic manipulator (1) can be moved manually by a user in the relevant degree of freedom assigned to the selected input device to be emulated and within the local limits assigned to the input device to be emulated,
- recording (S3) a relevant coordinate in the relevant degree of freedom during or after completion of an input, which is performed by manual guiding on the part of a user, on the robotic manipulator (1) by way of at least one sensor unit (7) connected to the robotic manipulator (1), and
- assigning (S4) the relevant coordinate to the input value by applying the transfer function.

2. The method according to claim 1,
wherein the actuation of the robotic manipulator (1) occurs in such a manner that all the remaining parts of the robotic manipulator (1) are blocked against manual guiding on the part of the user.

3. The method according to claim 1,
wherein the actuation of the robotic manipulator (1) occurs in such a manner that at least a subset of the remaining parts of the robotic manipulator (1) is enabled for manual guiding on the part of the user.

4. The method according to any one of the preceding claims,
wherein the actuation of the robotic manipulator (1) occurs in such a manner that the at least one part of the robotic manipulator (1) outputs haptic feedback in the relevant degree of freedom, wherein the haptic feedback is a resistance, which varies over the course of the manual guiding, with respect to the force of the user during the manual guiding of the robotic manipulator (1).

5. The method according to claim 4,
wherein the resistance has a local minimum where the current coordinate in the relevant degree of freedom of the robotic manipulator (1) coincides with a whole number of the result from applying the transfer function.

6. The method according to any one of the preceding claims,
moreover having the steps of:
- continuously recording (S3A) the relevant coordinate in the relevant degree of freedom during the input performed by manual guiding on the part of a user on the robotic manipulator (1) by way of the at least one sensor unit connected to the robotic manipulator (1), and
- in synchrony with the continuous recording of the relevant coordinate: outputting (S4A) the input value on an optical output unit (9).

7. The method according to any one of the preceding claims,
wherein the input device to be emulated is one of the following:
- sliding controller,
- rotary controller,
- joystick,
- push button.

8. The method according to any one of claims 1 to 7,
wherein the selection of the input device to be emulated occurs by performing and recording a haptic gesture executed by the user on the robotic manipulator (1).

9. The method according to any one of claims 1 to 7,
wherein the selection of the input device to be emulated occurs by recording an input entered by the user on a touch-sensitive screen, wherein the touch-sensitive screen is arranged on the robotic manipulator (1) or on a gripper arranged on the robotic manipulator (1).

10. A robotic manipulator (1), wherein the robotic manipulator (1) comprises a plurality of limbs which are connected to one another by articulations and which can be moved with respect to one another by actuation, comprising:
- a specification element (3) which is designed for selecting a particular input device to be emulated from a plurality of predefined input devices to be emulated, wherein each of the input devices to be emulated is assigned at least one degree of freedom of the robotic manipulator (1) and local limits in the relevant degree of freedom and a transfer function of a coordinate of the robotic manipulator (1) in the degree of freedom onto the input value,
- a control unit (5) which is designed for actuating the robotic manipulator (1) in such a manner that at least one part of the robotic manipulator (1) can be moved manually by a user in the relevant degree of freedom assigned to the selected input device to be emulated and within the local limits assigned to the input device to be emulated,
- a sensor unit (7) connected to the robotic manipulator (1), which is designed for recording a relevant coordinate in the relevant degree of freedom during or after completion of an input performed by manual guiding on the part of a user on the robotic manipulator (1), and
wherein the control unit (5) is designed for assigning the relevant coordinate to the input value by applying the transfer function.

## Revendications

1. Procédé permettant de spécifier une valeur d'entrée sur un robot manipulateur (1), dans lequel le robot manipulateur (1) présente une pluralité de membres reliés entre eux par des articulations et pouvant être déplacés les uns par rapport aux autres par commande, présentant les étapes consistant à :
- sélectionner (S1) un appareil d'entrée déterminé parmi une pluralité d'appareils d'entrée à émuler prédéfinis par spécification par un utilisateur ou par une unité de commande (5) du robot manipulateur (1),
dans lequel au moins un degré de liberté du robot manipulateur (1) et des limites locales dans le degré de liberté respectif et une fonction de transfert d'une coordonnée du robot manipulateur (1) dans le degré de liberté à la valeur d'entrée sont associés à chaque appareil d'entrée parmi les appareils d'entrée à émuler,
- commander (S2) le robot manipulateur (1) de telle sorte qu'au moins une partie du robot manipulateur (1) peut être déplacée manuellement par un utilisateur dans le degré de liberté respectif associé à l'appareil d'entrée à émuler sélectionné et dans les limites locales associées à l'appareil d'entrée à émuler,
- détecter (S3) une coordonnée respective dans le degré de liberté respectif pendant ou après l'achèvement d'une entrée, exercée par guidage manuel par un utilisateur, sur le robot manipulateur (1) au moyen d'au moins une unité formant capteur (7) connectée au robot manipulateur (1), et
- associer (S4) la coordonnée respective à la valeur d'entrée par application de la fonction de transfert.

2. Procédé selon la revendication 1,
dans lequel la commande du robot manipulateur (1) est effectuée de telle sorte que toutes les autres parties du robot manipulateur (1) sont bloquées à l'encontre d'un guidage manuel par l'utilisateur.

3. Procédé selon la revendication 1,
dans lequel la commande du robot manipulateur (1) est effectuée de telle sorte qu'au moins un sous-ensemble des autres parties du robot manipulateur (1) sont libérées pour le guidage manuel par l'utilisateur.

4. Procédé selon l'une des revendications précédentes,
dans lequel la commande du robot manipulateur (1) est effectuée de telle sorte que l'au moins une partie du robot manipulateur (1) délivre en sortie un signal de retour haptique dans le degré de liberté respectif, dans lequel le signal de retour haptique est une résistance, laquelle est modifiée sur l'étendue du guidage manuel, par rapport à la force de l'utilisateur lors du guidage manuel du robot manipulateur (1).

5. Procédé selon la revendication 4,
dans lequel la résistance présente un minimum local là où la coordonnée actuelle dans le degré de liberté respectif du robot manipulateur (1) coïncide avec un nombre entier du résultat de l'application de la fonction de transfert.

6. Procédé selon l'une des revendications précédentes,
présentant en outre les étapes consistant à :
- détecter en continu (S3A) la coordonnée respective dans le degré de liberté respectif pendant l'entrée, exercée par guidage manuel par un utilisateur, sur le robot manipulateur (1) au moyen de l'au moins une unité formant capteur connectée au robot manipulateur (1), et
- de manière synchrone avec la détection en continu de la coordonnée respective : délivrer en sortie (S4A) la valeur d'entrée sur une unité de sortie optique (9).

7. Procédé selon l'une des revendications précédentes,
dans lequel l'appareil d'entrée à émuler est un appareil parmi les appareils suivants :
- curseur,
- bouton tournant,
- manche à balai,
- bouton-poussoir.

8. Procédé selon l'une des revendications 1 à 7,
dans lequel la sélection de l'appareil d'entrée à émuler est effectuée par exécution et détection d'un geste haptique exécuté par l'utilisateur sur le robot manipulateur (1).

9. Procédé selon l'une des revendications 1 à 7,
dans lequel la sélection de l'appareil d'entrée à émuler est effectuée par détection d'une entrée saisie par l'utilisateur sur un écran tactile, dans lequel l'écran tactile est disposé sur le robot manipulateur (1) ou sur un élément de préhension disposé sur le robot manipulateur (1).

10. Robot manipulateur (1), dans lequel le robot manipulateur (1) présente une pluralité de membres reliés entre eux par des articulations et pouvant être déplacés les uns par rapport aux autres par commande, présentant :
- un élément de spécification (3) qui est configuré pour sélectionner un appareil d'entrée déterminé parmi une pluralité d'appareils d'entrée à émuler prédéfinis, dans lequel au moins un degré de liberté du robot manipulateur (1) et des limites locales dans le degré de liberté respectif et une fonction de transfert d'une coordonnée du robot manipulateur (1) dans le degré de liberté à la valeur d'entrée sont associés à chacun des appareils d'entrée à émuler,
- une unité de commande (5) qui est configurée pour commander le robot manipulateur (1) de telle sorte qu'au moins une partie du robot manipulateur (1) peut être déplacée manuellement par un utilisateur dans le degré de liberté respectif associé à l'appareil d'entrée à émuler sélectionné et dans les limites locales associées à l'appareil d'entrée à émuler,
- une unité formant capteur (7) connectée au robot manipulateur (1), laquelle est configurée pour détecter une coordonnée respective dans le degré de liberté respectif pendant ou après l'achèvement d'une entrée, exercée par guidage manuel par un utilisateur, sur le robot manipulateur (1), et
dans lequel l'unité de commande (5) est configurée pour associer la coordonnée respective à la valeur d'entrée par application de la fonction de transfert.
